# EUROPEAN PATENT SPECIFICATION

(11) **EP 1 804 994 B1**
(45) Date of publication and mention of the grant of the patent: **25.07.2012**
(21) Application number: 05807950.0
(22) Date of filing: 19.10.2005
(51) Int. Cl.: B29C 44/32, B29C 44/18, B29C 44/12

(54) **METHOD FOR MANUFACTURING A MULTILAYER INSULATING PANEL**
VERFAHREN ZUR HERSTELLUNG EINER MEHRSCHICHTIGEN ISOLIERENDEN TAFEL
PROCEDE DE FABRICATION DE PANNEAU ISOLANT MULTICOUCHE

(30) Priority: 20.10.2004 FR 0411185; 01.04.2005 FR 0503197
(43) Date of publication of application: 11.07.2007
(73) Proprietor: SOLVAY SA, 1120 Bruxelles (BE)
(72) Inventor: DEHENNAU, Claude, B-1410 WATERLOO (BE); GANSEMANS, Marc, B-1640 RHODE-ST-GENESE (BE)
(74) Representative: Jacques, Philippe
(86) International application number: PCT/EP2005/055355
(87) International publication number: WO 2006/045723

(56) References cited:
- EP-A- 0 310 440
- EP-A- 0 972 893
- WO-A-98/08674
- GB-A- 1 352 747
- US-A- 3 523 988
- US-A- 4 606 715
- US-B1- 6 387 200
- US-B1- 6 635 202
- PATENT ABSTRACTS OF JAPAN vol. 1997, no. 12, 25 December 1997 (1997-12-25) -& JP 09 209547 A (IG TECH RES INC), 12 August 1997 (1997-08-12)
- DATABASE WPI Section Ch, Week 199239 Derwent Publications Ltd., London, GB; Class A32, AN 1992-319520 XP002328783 & JP 04 223147 A (NIPPON TOKUSHU TORYO CO LTD) 13 August 1992 (1992-08-13)

## Description

The invention relates to a method for manufacturing multilayer insulating panels of given structure.

Many fields of economic activity require low-cost insulating panels. For example, in the building and civil engineering fields, the thermal insulation properties of the panels used for roofing or for various walling tasks are essential. The same is true in the fields of transport, refrigeration, etc. For these applications, it is known practice to use multilayer panels, in which one layer provides the thermal insulation. One or more other layers provide the whole with mechanical strength and possibly allow its external appearance to be tailored to suit.

In many circumstances (near motorways, airports, nosy machinery, etc.), acoustic insulation properties are desired in addition to the thermal insulation properties. To achieve this, multilayer panels having a core of expanded material (foam) between skins of non-expanded material have been proposed. However, in some instances, the mechanical properties obtained are insufficient and, what is more, the adhesion between the foam and the external skins is often unsatisfactory.

Patent US 6,673,415 discloses a structure allowing these problems to be solved and in which the foam in fact fills the cells of a honeycomb structure secured to the skins. Such a structure generally has the desired insulation and mechanical strength properties. However, the manner of manufacturing such structures, which consists first of all of in manufacturing the honeycomb filled with foam, then in facing it with the external layers (skins) is not economically viable. Furthermore, producing such faced panels continuously in a single step with plastic honeycombs is a task which is known from the outset to be tricky because it is known that the expansion of a composition comprising a foaming agent is an exothermal phenomenon and that the honeycomb in question is therefore liable to deform prohibitively.

Now, it has become apparent, surprisingly, that good results could be obtained with a plastic core and a one-step method in which the material filling the honeycomb is expanded between the two skins. Without wishing to be bound to one theory, the applicant company believes that this could be due to the progressive reduction in thermal conductivity obtained during the foaming of the composition.

The present invention therefore relates to a method for manufacturing a multilayer insulating panel according to claim 1. US-B-6635202 discloses a method according to the preamble of claim 1.

The panels that can be manufactured using the method according to the invention may be essentially flat or curved. The word "essentially" refers in particular to instances where the panels have a surface relief.

A "honeycomb" is intended to denote an object that is generally flat (in the overall form of a sheet) or slightly curved, comprising cavities, that is to say open or closed cells of any cross section, generally of circular or hexagonal cross section, with walls essentially parallel from one cell to the next and perpendicular to the surfaces of the sheet.

According to the invention, this honeycomb is filled with foam (preferably completely, that is to say to at least 90% or even 100% by volume, this being so as to encourage the adhesion of the various parts of the panel) to at least partially form the core of the panel. A "foam" is to be understood as meaning a material the density of which has been reduced by the addition of additives known as "foaming agents". Such additives are well known in the plastics trade. They may be of various types often grouped into two families: chemical foaming agents and physical foaming agents. They may also be combined. Information on this subject may be found in numerous technical works. The reductions in density vary greatly according to the foaming agent and the quantity used. In general, a "foam" is intended to denote a material the density of which has been reduced to less than 20% of its initial value (without foaming agents), or to less than 10% of this value and even to less than 5% of this value, for the same temperature and pressure conditions.

The core of the panel obtained in the context of the invention is sandwiched between two layers of non-expanded polyvinylchloride.

The term "thermoplastic" denotes any thermoplastic polymer, including thermoplastic elastomers, as well as blends thereof. The term "polymer" denotes both homopolymers and copolymers (especially binary or ternary copolymers). Examples of such copolymers are, non-limitingly, random copolymers, linear block copolymers, other block copolymers and graft copolymers.

The present invention yields good results with:
■ vinyl chloride polymers (PVC) as materials from which to make the honeycomb, and also the external layers;
■ polyurethanes (PUR) as materials from which to make the foam.

The choice of a honeycomb made of PVC, of external layers made of PVC also and of a foam made of PUR yields a structure that exhibits good resistance to fire, this being particularly true if the resin formulations (compositions) are chosen carefully. PVC and PUR formulations independently classified as M1 (in accordance with NFP 92.507) yield good results. Indeed the insulating panels obtained by the method according to the invention applied to such materials will also be classified M 1.

In terms of the PUR foam, water-free formulations based on a polyisocyanate, a polyol, an amine (by way of catalyst) and an HFC by way of blowing agent yield good results. This in itself is surprising given the fact that water is particularly used in numerous compositions in order to remove the heat energy of the exothermal expansion reaction. In particular, a water-free formulation containing MDI (methane diphenyl diisocyanate), a halogenated polyol of the IXOL® type and HFC-365mfc (1,1,1,3,3-pentafluorobutane) by way of blowing agent yields good results.

The above mentioned PUR compositions are preferably stoechiometric in terms of alcohol and isocyanate functions in order to avoid the formation of polyisocyanates, which do not well adhere to most of the plastics. Such compositions may be and preferably are expanded at room temperature, which avoids the need of an oven.

As far as the PVC sheets are concerned, these may be made of flexible, semi rigid or rigid PVC, preferably of grade M1. As a preference, they are based on rigid PVC.

According to a preferred variant of the invention, at least one of the external layers (and preferably both of them) is a sheet that has been biorientated according to known molecular orientation techniques. In the case of amorphous polymers and PVC in particular, this biorientation is generally achieved by biaxial drawing at a temperature ranging between the glass transition temperature (Tg) of PVC and Tg + 30°C, followed by cooling.

According to the invention, the honeycomb structure may merely be placed on top of the first external layer, after which the composition comprising the foaming agent is poured on said honeycomb and the other external layer placed on top of all. Alternatively, the plastic honeycomb is first secured to one of the external layers (film/sheet), or alternatively a honeycomb is secured to both external layers. This may be done by any appropriate means according to the nature of the materials. As the case may be, an adhesive may be used. Alternatively, the honeycomb(s) and the film(s)/sheet(s) may be secured by welding. One technique particularly well suited to this is the laser welding technique as described in FR-A-2857616 in the name of the Applicant company.

This technique is particularly advantageous with a honeycomb and a sheet both made of plastic, particularly of PVC.

According to a preferred embodiment of the present invention, each external layer is first assembled with a honeycomb structure and both assemblies are placed into the former with a space between them, through which the composition comprising the foaming agent can expand and propagate freely while expanding. This allows not taking too much care of the way the foaming composition is poured on the lower honeycomb, since it can propagate by itself. The same would apply in the case of only one honeycomb structure secured to the lower external layer by providing a free space between the upper part of said honeycomb and the upper external layer. However, such a structure is less performing in terms of mechanical properties.

The "former" referred to above is to be understood as meaning a press intended to hold the various non-expanded elements of the panel together while it is being manufactured and to allow the foam to expand between them. In general, this press comprises two distinct parts (a lower part and an upper part) which may either be fixed (the former is then said to be a fixed former) or able to move (in which case the former is said to be a mobile former).

In general, fixed formers are used in discontinuous methods, producing a given length of panel at a time (this length being substantially equal to the length of the former). In this type of method, the composition that is to be foamed is generally poured onto one of the external layers (which may or may not be provided with a honeycomb) that has been positioned beforehand on the lower part of the former. The upper part of the former is then closed down on top, this having been equipped beforehand with the other external layer which may or may not bear a honeycomb, then the composition is expanded in the cells of the honeycomb. Advantageously, in a method such as this, prior to closing the former, spacers will have been introduced between the two parts so as to set the chosen thickness for the panel that is to be manufactured. When spacers are introduced not only around the edges but also within the heart of the press, these spacers are advantageously also made of foam and, as a special preference, of a foam of the same kind as the foam that will be present in the honeycomb. Note that this type of former may have non-planar walls so that it can manufacture finished structures that are curved or bowed. In this case, the upper and lower sheets must be bonded respectively to the upper and lower walls of the former.

As for formers with moving walls, these are particularly suited to continuous methods. Indeed, "moving" is to be understood in fact as meaning the fact that the walls are in the form of endless belts wound around cylinders rotating at identical speeds. In this type of method, in general, the composition that is to be expanded is poured first of all into the cells of the honeycomb secured to or placed on one of the external layers then the entirety is positioned on the (moving) lower part of the former. At the same time, the other external layer (which may or may not bear a honeycomb) is secured to the other (upper) part of the former, also moving at the same speed. The length of the former and the rotational speed of the cylinders govern the residence time of the whole in the former, which needs to be long enough for the desired expansion to take place. In such a method, the separation of the cylinders and therefore of the endless belts dictates the thickness of the panels.

Both in this method and in the discontinuous method, where it is the spacers which define the thickness of the panel, it is possible to plan not to place the virgin layer in direct contact with the honeycomb of the other layer, this being in order perhaps to allow the foam to expand beyond (over the top of) the honeycomb (into an additional layer of foam not strengthened by honeycomb). It is also possible in these methods to plan for a honeycomb in contact with each of the external layers of the structure, possibly with virgin foam between the two honeycombs that are filled with foam on completion of the method.

Whether the method according to the invention be continuous or discontinuous, the step of securing the honeycomb and the external layer(s), the case being, may be performed independently, i.e. by a different individual and/or at a different site and/or at a different time than the next steps of the method. Thus, from an industrial standpoint, it may prove advantageous to purchase prefabricated external layer/honeycomb structures in order to produce the panels according to the invention by injecting and expanding a composition comprising a foaming agent between them, into a former.

According to the invention, the foaming (expansion) of the composition may be performed by heating it in an oven, or merely by mixing the ingredients and letting the reaction happen. The latter method is preferred. Since this reaction is exothermal, the temperature inside the composition while it is expanding, increases and may even reach rather high temperatures (150°C for instance) at certain points. Surprisingly however, as explained before, this does not lead to the deformation of the honeycomb structure, probably because the expansion makes the composition less thermally conductive.

Whatever the method envisaged, as a preference, the composition that is to be expanded is obtained by preblending its ingredients in at least 2 fractions, which are mixed just before the expansion. For the PUR foam the polyisocyanate and possibly a little foaming agent, on the one hand, and the polyol, the amine and the remainder of the foaming agent, on the other hand, are preferably mixed together first of all. These two fractions are then poured into a blender which feeds the former. The quantity of mixture used is such that, after foaming, the target density of the foam is achieved, bearing in mind the final thickness of the panel and therefore the volume that is to be filled.

Advantageously, all the elements of the panel are kept under pressure during expansion (foaming), the purpose of this being, in particular, to ensure good adhesion between the various elements of the structure and to stabilize its dimensions.

It must be noted that, as already mentioned hereinabove, the two external layers may be secured to a honeycomb and the two honeycombs will then advantageously be filled with foam, by expanding the composition within them, and, as a particular preference, will also be separated by a layer of virgin foam (free of honeycomb). This last variant yields good results in terms of the compromise between mechanical strength and weight.

Whatever the case may be, the external layers (films/sheets as such) are preferably identical in thickness and in composition. Were that not the case, their thicknesses would preferably be chosen such that they had the same flexural and tensile rigidity and similar linear expansion coefficients in the two directions of their plane (parallel to their sides).

It should finally be noted that the lateral edges of the panels may be equipped with an assembly device (for example consisting of section pieces made of PVC or wood or any other material) so that they can be assembled with a complementary panel. Such panels are described in applications WO 02/20915, FR-A-2856116 and FR-A-2860533, also in the name of the Applicant company.

The assembly device according to this variant of the invention is generally made up of two complementary section pieces which are either a section piece of the "male" type and a section piece of the "female" type, or two identical section pieces having shapes such that these section pieces nest together. The latter variant is preferred because it makes it possible in particular to reduce the costs of manufacture of the panels. Section pieces of "S" overall shape are particularly suitable. This is because this type of section piece, particularly when combined with a panel having an expanded core, gives a certain flexibility to the assembly (the possibility of twisting between section pieces when the panels are being assembled).

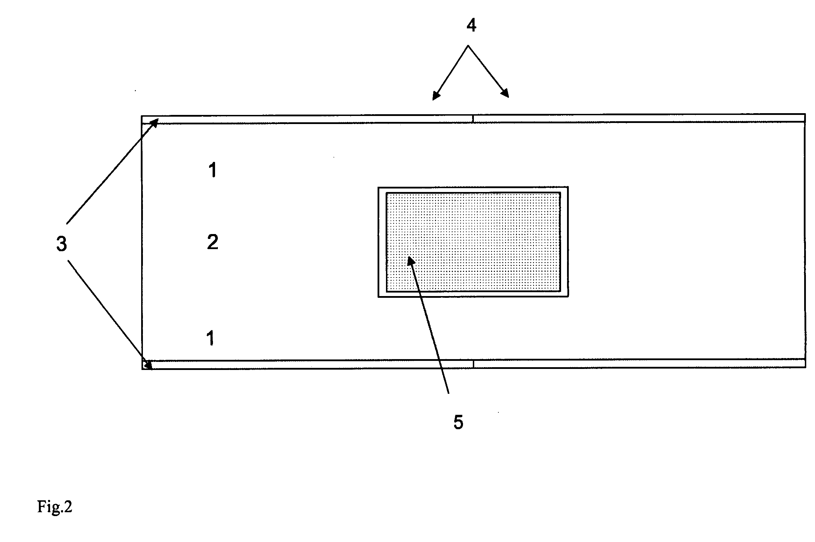

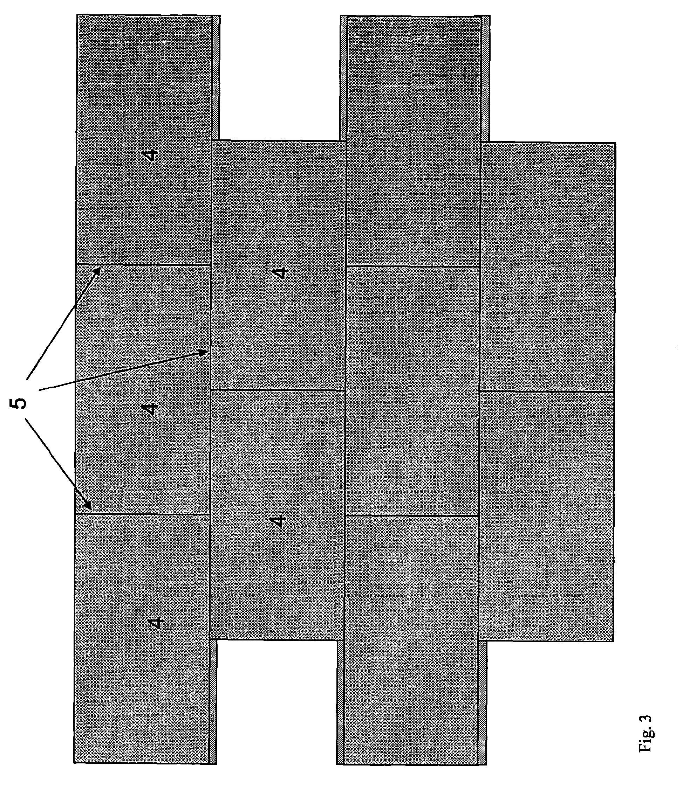

However, according to another variant (which is preferred in the case of floor coverings), section pieces of rectangular shape (preferably hollow ones) positioned in a groove made on each side between two adjacent panels are particularly suitable. In order to obtain a perfectly flat assembly with such a system of grooved panels and section pieces it is necessary for:
■ the height of the groove to be equal to the thickness of the section piece
■ the width of the groove to be equal to half the width of the section piece
■ the section piece to bear on each side against the honeycombs of the structure
■ the grooves to be identical between the various panels,
   this being as illustrated in Figures 2 and 3 of this application.

Assembly is performed by welding the section pieces into the grooves of the panels widthwise and lengthwise. This system of assembly makes it possible to obtain a perfectly flat assembly of panels, and one which remains perfectly flat in spite of the static and dynamic loads applied to it. A system such as this is therefore suitable for example for floor coverings for sports halls.

The honeycomb used in the method according to the invention may have been obtained by any appropriate method. As a preference, it is obtained by continuous extrusion as proposed in application FR-A-276099.

. In this case, advantageously, the method according to the invention is also a continuous method, using a mobile former as explained hereinabove and in which the honeycomb leaving the extruder is continuously secured to one of the external layers of the panel, preferably by laser welding, then filled with the composition that is to be expanded and finally fed into the former at the same time as the other external layer of the panel, which may or may not also be equipped with a honeycomb.

As to the films/sheets used in the method of the invention, these are generally obtained by extrusion in the case of plastic films. This extrusion may also be performed continuously and incorporated into the continuous method described hereinabove.

The present invention also relates to panels that can be obtained by the method according to the invention and which have a core comprising at least one honeycomb structure based on PVC filled with PUR foam and two external layers of PVC. As a preference, each of the elements that makes up these panels is based on M1 materials. As a very particular preference, the external layers are based on biorientated rigid PVC.

Finally, the panel obtained by the method according to the invention as defined above, is particularly suitable for use as an insulating covering or the wall of an insulating self-supporting structure for storing agri-foodstuffs or for manufacturing shelters. It may also be used as a floor covering, roofing, etc. or as a furnishing panel, etc.

Thus, for example, these panels may be used for extremely varied applications, such as for producing refrigerated warehouses, cold rooms and/or rooms for the storage of agri-foodstuffs; the construction of operating units for hospitals; the production of bodies or floors for transport vehicles (the floors of buses for examples); for insulating swimming pools; for building lightweight inexpensive dwellings, for various shelters, etc.

Furthermore, the panels are also advantageously used for the storing of agri-foodstuffs, for the manufacture of stables, etc.,

The excellent both thermal and acoustic insulation properties, sealing, resistance to corrosion, ease of assembly (and of disassembly) and finally the economic nature of the panels allow a particularly competitive use in these applications.

Another advantageous field of application for the panels is in the manufacture of temporary shelters, nursing stations, etc., in refugee camps for example. In particular, these panels may form the walls of an emergency shelter provided in flat-pack form as described in application

WO 02/061216. The said walls in this case are arranged on a transport pallet which will act as the floor of the shelter.

Finally, as mentioned previously, panels having a honeycomb structure filled with foam on each side, and a central part of virgin foam, are advantageously used as coverings in sports halls, particularly when assembled using the system illustrated in Figures 2 and 3.

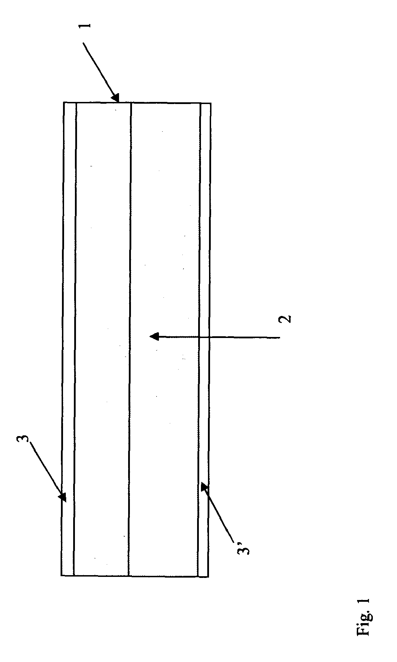

The present invention is illustrated nonlimitingly by Figures 1 to 3 which depict two advantageous variants of panels that can be obtained by the method according to the invention, and a method of assembling such panels.

The panel illustrated in Figure 1 comprises a cellular core made of honeycomb based on PVC and filled with PUR foam (1), the said foam having overspilled from the honeycomb into a layer of "virgin" foam (2). This core is contained between two rigid PVC films (3)(3').

This panel was manufactured as follows:
■ the honeycomb was laser welded to the film (3);
■ the composition used to produce the PUR foam was injected into the cells of the honeycomb, in sufficient quantity to obtain an overspilling of foam out of the honeycomb;
■ the film (3') was positioned on top of the whole and all was introduced into a former having its wall in contact with the film (3') able to move during expansion;
■ the composition was expanded, allowing the foam to overspill from the honeycomb (through movement of the aforementioned wall of the former);
■ the insulating multilayer panel thus obtained was removed from the former.

The panels (4) illustrated in Figures 2 and 3 have a core comprising, on each side, a honeycomb structured based on PVC and filled with PUR foam (1), the said foam having overspilled from the honeycombs to form a central layer of "virgin" foam (2). This core is contained between two rigid PVC films (3).

Figure 2 illustrates a section through two such panels (4) assembled using rectangular section pieces (5) made of PVC using the grooves method described earlier.

Figure 3 illustrates a view from above of several such panels (4) assembled using this same method. The section pieces (5) are completely contained within the grooves between adjacent panels (4) and are not visible from above. The assembly thus obtained has a flatness to within about 0.2 mm.

## Claims

1. Method for manufacturing a multilayer insulating panel having a cellular core comprising a honeycomb structure filled with foam and two external nonexpanded layers, the said method comprising the following steps:
■ one of the external layers of the panel is introduced into a former;
■ the honeycomb structure is placed on said layer and the second external layer together with a composition comprising a foaming agent that is poured are also introduced in the former;
■ the composition comprising the foaming agent is expanded;
■ the insulating panel is removed from the former, **characterized by**, that the honeycomb structure and the two external layers are made of polyvinyl chloride resin and the foam is made of polyurethane obtained from a water-free composition.

2. Method according to the preceding claim, **characterized in that** the foam completely fills the cells of the honeycomb.

3. Method according to the any one of the preceding claims, **characterized in that** the PUR is a stoechiometric composition in terms of alcohol and isocyanate functions and **in that** it is expanded at room temperature.

4. Method according to any one of the preceding claims, **characterized in that** at least one of the external layers has been biorientated.

5. Method according to any one of the preceding claims, **characterized in that** the honeycomb structure is first secured to the first external layer before both are introduced into the former.

6. Method according to the preceding claim, **characterized in that** the honeycomb and the external layer to which it is secured are made of the same material or compatible materials and **in that** they are secured by laser welding.

7. Method according to either one of the preceding claims, **characterized in that** each external layer is first assembled with a honeycomb structure and both assemblies are placed into the former with a space between them, through which the composition comprising the foaming agent can expand and propagate freely while expanding.

8. Method according to any one of the preceding claims, **characterized in that** it is a continuous method incorporating the continuous manufacture of the honeycomb by extrusion, in which the honeycomb resulting from the extrusion is continuously secured to one of the external layers of the panel, then filled with the composition that is to be expanded and then finally introduced into the former at the same time as the other external layer of the panel, which may or may not also be equipped with a honeycomb, the said former being a mobile former the lower and upper walls of which are endless belts driven by rotary cylinders.

9. Method according to any one of the preceding claims, **characterized in that** the 1 st step of securing the honeycomb structure to one of the external layers of the panel is performed independently of the other steps of the method.

## Patentansprüche

1. Verfahren zum Herstellen einer mehrschichtigen isolierenden Tafel, die einen zellenförmigen Kern aufweist, der eine mit Schaum gefüllte Wabenstruktur und zwei äußere, nicht expandierte Schichten umfasst, wobei das Verfahren die folgenden Schritte umfasst:
- eine der äußeren Schichten der Tafel wird in ein Formwerkzeug eingeführt;
- die Wabenstruktur wird auf der Schicht angeordnet und die zweite äußere Schicht wird zusammen mit einer Zusammensetzung, die ein Schäummittel umfasst, das gegossen wird, ebenfalls in das Formwerkzeug eingeführt;
- die Zusammensetzung, die das Schäummittel umfasst, wird expandiert;
- die isolierende Tafel wird aus dem Formwerkzeug entfernt,
**dadurch gekennzeichnet, dass** die Wabenstruktur und die beiden äußeren Schichten aus Polyvinylchloridharz hergestellt werden und der Schaum aus Polyurethan hergestellt wird, das aus einer wasserfreien Zusammensetzung erhalten wird.

2. Verfahren nach dem vorhergehenden Anspruch, **dadurch gekennzeichnet, dass** der Schaum die Zellen der Wabe vollständig ausfüllt.

3. Verfahren nach einem der vorhergehenden Ansprüche, **dadurch gekennzeichnet, dass** das PUR im Hinblick auf Alkohol- und Isocyanatfunktionen eine stöchiometrische Zusammensetzung ist, und dadurch, dass es bei Raumtemperatur expandiert wird.

4. Verfahren nach einem der vorhergehenden Ansprüche, **dadurch gekennzeichnet, dass** mindestens eine der äußeren Schichten biorientiert wurde.

5. Verfahren nach einem der vorhergehenden Ansprüche, **dadurch gekennzeichnet, dass** die Wabenstruktur zunächst auf der ersten äußeren Schicht befestigt wird, bevor beide in das Formwerkzeug eingeführt werden.

6. Verfahren nach dem vorhergehenden Anspruch, **dadurch gekennzeichnet, dass** die Wabe und die äußere Schicht, an der sie befestigt ist, aus dem gleichen Material oder kompatiblen Materialen hergestellt wurden und dadurch, dass sie mittels Laserschweißen befestigt werden.

7. Verfahren nach einem der vorhergehenden Ansprüche, **dadurch gekennzeichnet, dass** jede äußere Schicht zunächst mit einer Wabenstruktur zusammengebaut wird und beide Bauelemente in dem Formwerkzeug mit einem Raum dazwischen angeordnet werden, durch den die Zusammensetzung, die das Schäummittel umfasst, sich expandieren und während der Expansion frei ausbreiten kann.

8. Verfahren nach einem der vorhergehenden Ansprüche, **dadurch gekennzeichnet, dass** es ein kontinuierliches Verfahren ist, zu dem das kontinuierliche Herstellen der Wabe durch Extrusion gehört, bei dem die aus der Extrusion resultierende Wabe kontinuierlich an einer der äußeren Schichten der Tafel befestigt ist, dann mit der Zusammensetzung, die expandiert werden soll, gefüllt und dann schließlich in das Formwerkzeug eingeführt wird, gleichzeitig mit der anderen äußeren Schicht der Tafel, die mit einer Wabe ausgestattet sein kann oder nicht, wobei das Formwerkzeug ein bewegliches Formwerkzeug ist, dessen untere und obere Wand Endlosbänder sind, die durch Rotationszylinder angetrieben werden.

9. Verfahren nach einem der vorhergehenden Ansprüche, **dadurch gekennzeichnet, dass** der erste Schritt des Befestigens der Wabenstruktur an einer der äußeren Schichten der Tafel unabhängig von den anderen Schritten des Verfahrens durchgeführt wird.

## Revendications

1. Méthode pour la fabrication d'un panneau isolant multicouche ayant une âme cellulaire comprenant une structure en nid d'abeilles remplie de mousse et deux couches externes non expansées, ledit procédé comprenant les étapes suivantes :
■ on introduit une des couches externes du panneau dans un conformateur ;
■ on place la structure en nid d'abeilles sur ladite couche et l'on introduit également dans le conformateur la seconde couche externe ainsi qu'une composition comprenant un agent moussant que l'on coule ;
■ on procède à l'expansion de la composition comprenant l'agent moussant ;
■ on retire le panneau isolant du conformateur ;
**caractérisée en ce que** la structure en nid d'abeilles et les deux couches externes sont faites de résine de chlorure de polyvinyle et que la mousse est faite de polyuréthane obtenue à partir d'une composition exempte d'eau.

2. Méthode selon la revendication précédente, **caractérisée en ce que** la mousse remplit entièrement les cellules du nid d'abeilles.

3. Méthode selon l'une quelconque des revendications précédentes, **caractérisée en ce que** le PUR est une composition stoechiométrique en termes de fonction alcool et isocyanate et **en ce qu'**il est expansé à température ambiante.

4. Méthode selon l'une quelconque des revendications précédentes, **caractérisé en ce qu'**au moins une des couches externes a été bioriéntée.

5. Méthode selon l'une quelconque des revendications précédentes, **caractérisée en ce que** la structure en nid d'abeilles est d'abord sécurisée à la première couche externe avant que les deux ne soient introduites dans le conformateur.

6. Méthode selon l'une quelconque des revendications précédentes, **caractérisée en ce que** le nid d'abeilles et la couche externe à laquelle il est solidarisé sont à base du même matériau ou de matériaux compatibles, et qu'on les solidarise par soudure laser.

7. Méthode selon n'importe laquelle des revendications précédentes, **caractérisée en ce que** chaque couche externe est d'abord assemblée avec une structure en nid d'abeilles et que les deux assemblages sont placés dans le conformateur avec un espace entre eux, au travers duquel la composition comprenant l'agent moussant peut s'expanser et se propager librement tout en s'expansant.

8. Méthode selon l'une quelconque des revendications précédentes, **caractérisée en ce qu'**il est un procédé continu intégrant la fabrication en continu du nid d'abeilles par une extrusion, dans lequel le nid d'abeilles issu de l'extrusion est solidarisé en continu avec une des couches extérieures du panneau, puis rempli avec la composition à expanser et finalement, introduit dans le conformateur simultanément à l'autre couche externe du panneau, qui peut ou non également être munie d'un nid d'abeilles, ledit conformateur étant un conformateur mobile dont les parois inférieure et supérieure sont des bandes sans fin entraînées par des cylindres rotatifs.

9. Méthode selon l'une quelconque des revendications précédentes, **caractérisée en ce que** la première étape de sécurisation de la structure en nid d'abeilles à l'une des couches extérieures du panneau est réalisée indépendamment des autres étapes de la méthode.
